# EUROPÄISCHE PATENTSCHRIFT

(11) **EP 3 912 800 B1**
(45) Veröffentlichungstag und Bekanntmachung des Hinweises auf die Patenterteilung: **21.08.2024**
(21) Anmeldenummer: 21174450.3
(22) Anmeldetag: 18.05.2021
(51) Int. Cl.: B29C 64/118, B29C 64/209, B29C 64/232, B29C 64/236, B29C 64/241, B33Y 10/00, B33Y 30/00, B33Y 70/10, B22F 10/00, B22F 12/00, B29C 48/02, B29C 48/365, B29C 48/37, E04G 21/02, C04B 28/02, C04B 111/00, B28B 1/00, E04G 21/04

(54) **VORRICHTUNG FÜR DIE ADDITIVE FERTIGUNG UND VERFAHREN ZUR HERSTELLUNG EINES KÖRPERS MIT EINER SOLCHEN VORRICHTUNG**
DEVICE FOR ADDITIVE MANUFACTURING AND METHOD FOR MANUFACTURING A BODY WITH SUCH A DEVICE
DISPOSITIF DE FABRICATION ADDITIVE ET PROCÉDÉ DE FABRICATION D'UN CORPS DOTÉ D'UN TEL DISPOSITIF

(30) Priorität: 18.05.2020 DE 102020113408
(43) Veröffentlichungstag der Anmeldung: 24.11.2021
(73) Patentinhaber: Rheinisch-Westfälische Technische Hochschule (RWTH) Aachen, 52062 Aachen (DE)
(72) Erfinder: Adams, Thomas, 52062 Aachen (DE); Heuer, Christoph, 52078 Aachen (DE); Brell-Cokcan, Sigrid, 52064 Aachen (DE); Matschei, Thomas, 07646 Albersdorf (DE); Cleven, Simon, 52538 Selfkant-Saeffelen (DE); Maday, Denise, 52062 Aachen (DE)
(74) Vertreter: Grünecker Patent- und Rechtsanwälte PartG mbB

(56) Entgegenhaltungen:
- EP-A1- 3 431 172
- CN-B- 105 216 333
- FR-A1- 3 067 637
- JP-A- 2019 147 338
- US-A1- 2015 367 576
- US-A1- 2017 259 502
- US-A1- 2019 091 929

## Beschreibung

Die vorliegende Erfindung betrifft eine Vorrichtung für die additive Fertigung gemäß dem Patentanspruch 1.

JP 2019 147338 A offenbart eine Vorrichtung und ein Verfahren, die/das ein zähflüssiges Material, das hauptsächlich aus einem Material auf Zementbasis besteht, einer Auslassdüse zuführt und das zähflüssige Material, das aus der Düsenspitze austritt, unter Verwendung von 3D-Druckertechnologie wiederholt laminiert.

CN 105 216 333 B betrifft eine Vorrichtung zur Extrusion von flüssigem Material auf der Basis eines dreidimensionalen Druckers, insbesondere ein flüssiges Extrusionssystem für einen dreidimensionalen Drucker, das kontinuierlich gespeist werden kann, und ein Verfahren zu seiner Verwirklichung.

FR 3 067 637 A1 betrifft ein System zur Extrusion von Strängen aus zementartigem Material für Roboter zur additiven Fertigung von architektonischen Strukturen.

Eine ähnliche Vorrichtung ist aus der EP 3 431 172 A1 bekannt. Vorrichtungen zur additiven Fertigung aus anderen Materialien und in anderen Größenmaßstäben sind aus der US 2019/0091929 A1, der US 2016/0230283 A1, der US 2017/0259502 A1 und der US 2015/0367576 A1 bekannt. Des Weiteren gibt die vorliegende Erfindung ein Verfahren zur Herstellung eines Körpers aus einem anisotropen Material mit einer solchen Vorrichtung gemäß dem Patentanspruch 12 an.

Im Stand der Technik sind Vorrichtungen zum Aufbauen eines Körpers mit faserhaltigen Materialien durch additive Fertigungsverfahren bekannt. In additiven Fertigungsverfahren, insbesondere in 3D-Druckverfahren, werden Werkstücke durch das sukzessive Aneinanderfügen kleiner Volumina von Material auf der Basis eines digitalen Modells automatisch und ohne werkstückspezifische Werkzeuge aufgebaut. Charakteristisch für diese Verfahren ist eine weitgehende Unabhängigkeit der Herstellungskosten von der Stückzahl und von der geometrischen Komplexität des Werkstücks. Je nach Verfahrensvariante können die verschiedensten Materialien verarbeitet werden, von Kunststoffen über Metalle bis hin zu mineralischen Stoffen wie Gips, Keramik und zementgebundenen Stoffen. Die additiven Verfahren haben sich über ihren ursprünglichen Anwendungsbereich des Modell- und Prototypenbaus hinaus in vielen Bereichen der Produktion neben konventionellen Herstellungsverfahren durchsetzen können.

Methoden zur Herstellung dreidimensionaler Objekte werden beispielsweise in der WO 2018/187514 A1 beschrieben, wobei eine Düse in einem Gel in einem Behälter mit Gel positioniert ist. Die Position der Düse innerhalb des Gels wird verändert, während erstarrendes Material durch die Düse abgeschieden und zum Aufbau der Körper aufgetragen wird. Das Gel dient als Trägermaterial und trägt das zu erstarrende Material an die Position, an die sich das zu erstarrende Material anlagern soll. Durch ein solches Verfahren können dreidimensionale Objekte additiv aufgebaut werden.

Weitere mögliche Einsatzgebiete von additiven Fertigungsverfahren liegen in der Fertigung von Bauteilen durch die Materialextrusion von kurzfaserbewehrten oder endlosfaserverstärkten Kunststoffen, Harzen oder mineralischen Stoffen wie Zementleime, Mörtel oder Beton sowie im Bereich der Geopolymere. Dem Beton werden bei der Herstellung Fasern zugegeben, um die rheologischen Eigenschaften und die Schwindeigenschaften im weichen Zustand als auch die mechanischen Eigenschaften im festen Zustand zu verbessern. Damit kann ein Faserkomposit im Gegensatz zu bspw. Beton ein höheres Zugtragverhalten, eine höhere Duktilität und eine höhere Nachrissfestigkeit aufweisen. Dies führt zu der Möglichkeit jegliche Körperform mit einer verbesserten Tragfähigkeit herzustellen.

Faserbeton ist ein Beton, dem bei der Herstellung zur Verbesserung des Riss- und Bruchverhaltens Fasern, vorzugsweise Stahl-, Glas-, Kunststoff-, Kohlenstoff- oder Naturfasern zugesetzt werden. Die Fasern sind im Zementleim bzw. dem Zementstein der festigkeitsbildenden Matrix eingebettet und wirken dort als verbundsteigernde Bewehrung. Die Matrix bestimmt in erster Linie das Zugtragverhalten des Betons.

Eine in die Matrix eingebaute Bewehrung aus zugfesten und dehnfähigen Fasern hemmt das Öffnen von Rissen bzw. bewirkt eine Aufteilung in viele, sehr feine und in der Regel unschädliche Risse. Unter bestimmten Voraussetzungen verbinden die Fasern die Rissufer zugfest miteinander und ermöglichen auch bei größeren Dehnungen noch eine Übertragung von nennenswerten Zugkräften. Es besteht die Möglichkeit, in den Beton durchgehende lange Fasern in Richtung der zu erwartenden Zugbeanspruchung einzulegen oder kurze Fasern auszurichten. Beispielsweise beschreibt die EP 3 141 362 A1 eine Anordnung und ein Verfahren zur Herstellung einer Struktur aus Mörtel oder Beton. In diesem Verfahren wird eine mit Schnittfasern enthaltende fließfähige Masse von einem ersten Raum durch wenigstens einen Durchtritt in einer Strömungsrichtung zu einem zweiten Raum gefördert, an dem die Fließfähigkeit der fließenden Masse abnimmt. Über die Größenverhältnisse des ersten und des zweiten Raumes kann die Ausrichtung der Fasern gesteuert werden. Eine solch beschriebene für das Verfahren vorgesehene Anordnung bringt das Fasermaterial quer in Faserrichtung auf das zu verlängernde Bauteil auf.

Problematisch ist, dass die derzeit beschriebenen Verfahren und Anordnungen bei einem additiven Aufbau von faserverstärkten Bauteilen nicht zu gewünschten Eigenschaften der Bauteile in Bezug auf die Festigkeit führen, da die Ausrichtung des Materials beziehungsweise die Faserausrichtung im Bauteil sich nicht einheitlich über das gesamte Bauteil erstreckt. Fasern brechen und/oder orientieren sich beim schichtweisen Aufbau von Bauteilen um, wenn die Zugänglichkeit der Düsenausrichtung bei automatisierten Fertigungen der Bauteile eingeschränkt ist.

Hier setzt die vorliegende Erfindung an, wobei die bereits beschriebenen Ausführungen in Bezug auf das additive Fertigungsverfahren, insbesondere aus faserhaltigen zementgebundenen Stoffen, ebenfalls auf die vorliegende Erfindung angewendet werden können. Es ist die Aufgabe der vorliegenden Erfindung eine Vorrichtung zum Aufbauen eines Körpers aus faserhaltigen Materialien bereitzustellen, die es ermöglicht, den Aufbau des Körpers hinsichtlich der Faserausrichtung im Körper zu verbessern. Ferner ist die Aufgabe der vorliegenden Erfindung ein Verfahren zur Herstellung eines Körpers bereitzustellen, das einen verbesserten additiven Aufbau von Körpern aus faserhaltigen Materialien hinsichtlich der Faserausrichtung im Körper als auch der Geometrie der Körper ermöglichen soll.

Diese Aufgabe wird durch eine Vorrichtung mit den Merkmalen des Anspruchs 1 und durch ein Verfahren mit den Merkmalen des Anspruchs 12 gelöst. Bevorzugte oder vorteilhafte Ausführungsformen der Erfindung ergeben sich aus den abhängigen Ansprüchen, der nachfolgenden Beschreibung und/oder den beigefügten Figuren.

Gelöst wird die Aufgabe durch eine Vorrichtung mit einer Fördervorrichtung, einem Positionierungssystem, an dem die Fördervorrichtung befestigt ist, einem mit einer Ausgangsöffnung der Fördervorrichtung kommunizierenden Förderkanal und mit einer dem Förderkanal zugeordneten Stelleinrichtung zur gesteuerten Veränderung einer Orientierung einer Ausförderöffnung des Förderkanals. Die Vorrichtung zeichnet sich dadurch aus, dass die Fördervorrichtung als ein Extruder oder als eine Pumpe ausgebildet ist, der bzw. die zum Fördern einer fließfähigen Suspension angepasst ausgebildet ist, und dass der Extruder oder die Pumpe durch das Positionierungssystem translatorisch bewegbar ist. Der Extruder oder die Pumpe kann insofern in einer linearen Bewegung bewegt werden. Der linearen Bewegung kann eine Schwenkbewegung überlagert sein oder folgen. Eine solche Schwenkbewegung kann vorzugsweise durch das Positionierungssystem ausgeführt werden. Sie kann auch vor der linearen Bewegung erfolgen.

Gemäß Anspruch 1 besteht der Förderkanal zumindest teilweise aus einem flexiblen Material, sodass die zugeordnete Stelleinrichtung eine Veränderung des Verlaufs des Förderkanals ermöglichen kann. Flexible Materialien können beispielsweise Gummi, Silikone oder Kunststoffe sein, wobei andere flexible Materialien denkbar sind. Vorteilhafterweise kann die Ausförderöffnung des Förderkanals somit gezielt zu dem Bereich des aufzubauenden Körpers gesteuert werden, ohne dass das Positionierungssystem eine räumliche Korrektur vornehmen muss. Dies ist insbesondere dann von Vorteil, wenn sich der Körper in einem Bereich beispielsweise in einem Gefäß befindet, das für das Positionierungssystem nur begrenzt zugänglich ist.

Ein Gefäß im Sinne der Erfindung kann durch eine im Raum fixierte, fest vorgegebene Form gebildet sein. Ebenso gut kann ein Gefäß eine veränderliche Form haben und/oder beweglich sein. Nach einem Aspekt der vorliegenden Erfindung wird ein durch eine Gleitschalung gebildetes bewegliches Gefäß in den Blick genommen, das Teil der erfindungsgemäßen Vorrichtung sein kann. Die Gleitschalung wird dabei in an sich bekannter Weise mit dem fortschreitenden Aufbau des Körpers kontinuierlich weitergeschoben und auf dem bereits aufgebauten Teil abgestützt. Gleitschalungen sind aus der Gleitbauweise bekannt, die vor allem bei hohen Betonbauten angewandt wird. Der Beton bindet während des Gleitens ab, so dass er am unteren Ende der Schalung eine ausreichende Festigkeit besitzt, um diese abstützen zu können. Dabei wird der Betoniervorgang nicht unterbrochen.

Ein erfindungsgemäßes Positionierungssystem ist üblicherweise ein Gerät, das die physikalische Positionierung und/oder Orientierung von Objekten in einer Umgebung ermöglicht. Ein Positionierungssystem weist im Wesentlichen folgende Elemente auf: Achsen mit den Antriebseinheiten (Motoren, Getriebe, Winkelgeber), Verbindungselemente für den strukturellen Aufbau und die mechanische Kopplung der Achsen, Kabel bzw. Leitungen zu deren Energieversorgung, Ansteuerung und Signalübertragung und ein Gehäuse. In der Regel ist ein Positionierungssystem computergesteuert, wobei eine teilweise manuelle Steuerung ebenfalls denkbar ist. Im Prinzip ist das Positionierungssystem ein antriebstechnisches mehrachsiges System, welches man gewöhnlich mit einem Portalsystem oder einem Industrieroboter assoziiert.

Ein Extruder bzw. eine Pumpe wird als Fördervorrichtung zum Fördern von fließfähigen Suspensionen oder Pasten gemäß Anspruch 1 verwendet. Die Fördervorrichtung ist hierfür als Exzenterschneckenpumpe, Kolbenpumpe, Schneckenpumpe, Schneckenextruder, Planetwalzenextruder, Kaskadenextruder, Vielwellenextruder, Einschneckenextruder, gleichläufiger oder gegenläufiger Doppelschneckenextruder ausgebildet. Die Exzenterschneckenpumpe weist für gewöhnlich ein rotierendes Teil, den Rotor, und ein feststehendes Teil, den Stator, in dem sich der Rotor drehend bewegt, auf. Der Rotor hat üblicherweise eine Art Rundgewinde-Schraube mit großer Steigung, großer Gangtiefe und kleinem Kerndurchmesser und wird durch einen motorischen Antrieb computergesteuert oder manuell geregelt. Die Kolbenpumpe weist in der Regel einen zylindrischen Hohlraum, einen darin beweglichen Kolben und eine Vorschubeinrichtung, die durch axiale Bewegung den Kolben vorschiebt, auf. Die axiale Bewegung wird dabei üblicherweise durch einen rotierenden Antrieb computergesteuert oder manuell erzeugt. Die Schneckenpumpe weist für gewöhnlich zumindest eine Schneckenwelle (Schnecke) auf, die in einem Schneckenzylinder liegt, dessen Innendurchmesser in etwa dem Außendurchmesser der Schnecke entspricht. Aber auch andere Bauformen des Schneckenextruders sind denkbar. Beispielhaft sind Planetwalzenextruder, Kaskadenextruder, Vielwellenextruder, Einschneckenextruder oder gleichläufige oder gegenläufige Doppelschneckenextruder zu nennen. Die Ausgangskomponenten mitsamt Fasern werden in der Regel vorab gemischt und als Mischung dem Extruder oder der Pumpe zugegeben. Der Extruder bzw. die Pumpe im Sinne der Erfindung weist üblicherweise zumindest einen Kolben oder eine Schnecke zur Erzeugung eines Drucks zum Ausfördern des zugeführten Materials auf. Dabei liegt der erzeugte Druck in der Regel in einem Bereich zwischen 0,5 bis 150 bar.

Nach einer bevorzugten Weiterbildung der vorliegenden Erfindung weist die Stelleinrichtung eine steuerbare mechanische Halterung auf, die an ein flexibles, den Förderkanal umgebendes Schlauchstück angreift. Weiter bevorzugt greift die Halterung an einem Ende des Förderkanals an dem Schlauchstück an und ist zur Ausrichtung einer Ausförderöffnung des Förderkanals um eine Schwenkachse schwenkbar. So lässt sich die Ausrichtung bzw. die Orientierung der Ausförderöffnung und damit die Ausförderrichtung des Materials mit einfachen mechanischen Mitteln steuern. Die Orientierung der Ausförderöffnung gibt die Ausförderrichtung vor.

Nach einer weiteren bevorzugten Weiterbildung der vorliegenden Erfindung ist die Halterung an einer Drehvorrichtung befestigt und umfasst ein erstes Stellelement, das an der Ausförderöffnung des Förderkanals angreift und um die Schwenkachse schwenkbar gelagert ist, und ein mit dem ersten Stellelement mechanisch gekoppeltes zweites Stellelement zum Einstellen des Schwenkwinkels des zweiten Stellelements. Vorzugsweise ist das erste Stellelement im Wesentlichen plattenförmig mit bevorzugt konischer Durchgangsöffnung ausgebildet. Die konische Durchgangsöffnung kann insbesondere als Düse im Sinne der Erfindung ausgebildet sein.

Bevorzugt ist zumindest ein die Schwenkachse lagernder Teil der Drehvorrichtung um eine Rotationsachse drehbar, wobei die Schwenkachse quer zu der Rotationsachse verläuft. Dadurch lässt sich die Ausförderöffnung beliebig im Raum orientieren. Die Stelleinrichtung und die Drehvorrichtung bilden eine Ausrichteinrichtung. Die Ausrichteinrichtung ist in der Regel an einem ausgangsseitigen Ende des Extruders oder der Pumpe vorgesehen.

Die Ausförderöffnung kann bei der vorliegenden Erfindung zylindrisch und nicht wie bei einer Düse konisch zulaufend ausgebildet sein. Denn bei der Erfindung kann die Düse an dem freien Ende des Förderkanals vorgesehen sein. Umfasst der Extruder eine Schneckenpumpe, ist die Schnecke am hinteren Ende des Schneckenzylinders gelagert. Dort befindet sich auch der Antrieb, der in der Regel aus einem Elektromotor und einer Getriebeeinheit besteht. Dieses wird als Extrudergetriebe bezeichnet und sorgt für die Rotation der Schnecke. Eine Zuführung der zu verarbeitenden Materialien in die Schnecke kann über eine Förderzufuhr erfolgen. Wesentlich ist hierbei, dass die Dosierung der zugeführten Komponenten exakt und jederzeit reproduzierbar erfolgt. Je nachdem, wie der Regelmechanismus der Dosierung gestaltet ist, wird zwischen volumetrischen und gravimetrischen Dosierungen unterschieden. Werden weitere Komponenten für die Herstellung benötigt, beispielsweise Verstärkungsfasern, lassen sich diese zum Beispiel über Nadelventile oder eine Seitenbeschickung in den Schneckenzylinder einbringen. Ferner können am Schneckenzylinder außen Heizbänder befestigt sein. Diese schmelzen das zugeführte Material auf. Je nach Aufbau und Verfahren kann es notwendig werden, den Extruder nicht nur zu beheizen, sondern das darin enthaltenen, Material auch zu kühlen. Diese Kühlung erfolgt entweder über Kühlgebläse oder in Kühlkanäle, die in den Schneckenzylinder eingearbeitet sind. In diesen befindet sich ein Kühlmedium. Hierbei kann es sich zum Beispiel um unter Druck stehendes Wasser handeln.

Die erfindungsgemäße Vorrichtung erlaubt vorteilhafterweise den gezielten Aufbau von Körpern mit deutlich weniger Bruchkanten, Fehlstellen und Korngrenzen, sodass der Körper verbesserte Materialeigenschaften gegenüber dem Stand der Technik in Bezug auf die Zug-, Druck- und Scherfestigkeit aufzeigt.

Im Sinne der Erfindung wird ein Körper aus einem orthotropen Material aufgebaut. Unter orthotrop wird vorliegend ein faserhaltiges Material verstanden, wobei die Fasern überwiegend eine Vorzugsrichtung aufzeigen. Ausgerichtete Fasern sind größtenteils parallel angeordnet. Die Ausrichtung von Fasern in einem Material kann beispielsweise durch eine Düse oder innere Scherkräfte durch Strömungsgeschwindigkeiten entlang einer geleiteten Förderung im Material erfolgen. Dabei fließt das faserhaltige Material durch eine Verjüngung, wobei die Fasern während des Fließvorgangs ausgerichtet werden. Extrudiertes faserhaltiges Material kann aus einer Matrix bestehen, beispielsweise Zementleim bzw. Mörtel, wobei die Matrix Fasern, beispielsweise Stahl-, Glas-, Kunststoff-, Natur- oder Kohlestofffasem, umfasst. Solche Fasern können unterschiedlich in Bezug auf die Form und Länge ausgestaltet sein. Mögliche Einsatzgebiete der erfindungsgemäßen Vorrichtung liegen im additiven Fertigungsverfahren insbesondere in der Fertigung von zugfesten Strukturen oder ganzen Bauteilen durch die Materialextrusion von kurzfaserbewehrten oder endlosfaserverstärkten Kunststoffen, Harzen oder zementgebundenen Stoffen wie Zementleim, Mörtel oder Beton sowie im Bereich der Geopolymere. Eine in die Matrix eingebaute Bewehrung aus zugfesten und dehnfähigen Fasern hemmt das Öffnen von Rissen bzw. bewirkt bei größeren Dehnungen eine Aufteilung in viele, sehr feine und in der Regel unschädliche Risse. Unter bestimmten Voraussetzungen verbinden die Fasern die Rissufer zugfest miteinander und ermöglichen auch bei größeren Dehnungen noch eine Übertragung von nennenswerten Zugkräften. Es besteht die Möglichkeit, in das zementgebundene Material durchgehende lange Fasern in Richtung der zu erwartenden Zugbeanspruchung einzulegen oder kurze Fasern einzumischen.

Denkbar ist ebenfalls, dass der Körper mit einem Material aufgebaut wird, das magnetische Faserpartikel umfasst. Dazu ist wesentlich, dass sich die magnetischen Faserpartikel im Körper in eine einheitliche Richtung ausrichten, um die magnetischen Eigenschaften des Körpers gewünscht einzustellen. Insbesondere eisenhaltige Faserpartikel zeigen solche magnetischen Eigenschaften auf und können in einer Matrix beispielsweise in einem Kunststoff eingebettet werden. Vorteilhafterweise zeigen solche Körper mit magnetischen Faserpartikeln deutliche bessere Materialeigenschaften in Bezug auf die Festigkeit auf und sind zusätzlich magnetisierbar.

Ferner ist ebenfalls der Aufbau eines Körpers lediglich mit einem Polymerwerkstoff denkbar. Hierbei weist der Körper Polymere mit einer einheitlichen Polymerkettenausrichtung auf. Denkbar ist, dass sich die Polymerketten im Extruder oder in dem Förderkanal ausrichten. Eine Ausrichtung der Polymerketten im Körper führt zu verbesserten Materialeigenschaften in Bezug auf die Festigkeit von Kunststoffkörpern.

Bevorzugt befindet sich an einem Ende des Förderkanals eine damit verbundene Düse, die so ausgebildet ist, dass extrudiertes anisotropes Material, insbesondere faserhaltiges Material, ausgerichtet oder orientiert wird. Die Düse kann unterschiedlich ausgestaltet sein. Denkbar ist eine Düse mit einer runden oder einer mehreckigen Öffnung. Die Form der Öffnung kann der gewünschten Form des Körpers individuell angepasst werden. Vorteilhafterweise kann die Düse des Förderkanals somit gezielt zu dem Bereich des aufzubauenden Körpers gesteuert werden, ohne dass das Positionierungssystem beispielsweise eine räumliche Korrektur vornehmen muss. Ferner kann durch die Düse eine Ausrichtung der Fasern eines extrudierten faserhaltigen Materials erfolgen. Der Einsatz eines solchen Materials führt zu deutlich besseren Materialeigenschaften des Körpers in Bezug auf die Zug-, Druck- und Scherfestigkeit. Die Düse läuft in Förderrichtung konisch zu.

Nach einer bevorzugten Weiterbildung der vorliegenden Erfindung ist die Stelleinrichtung eine hydraulische oder pneumatische Stelleinrichtung. Diese hat mehrere umfänglich um den Förderkanal angeordnete Kammern, denen jeweils eine Druckquelle für das Einbringen eines Fluids in die Kammer zugeordnet ist. Dazu sind bevorzugt mehr als drei Kammern umfänglich um den Förderkanal angeordnet. Eine Druckquelle kann innerhalb oder außerhalb der jeweiligen Kammer angeordnet sein und beispielsweise eine Pumpe sein. Wesentlich ist, dass die Druckquelle so ausgebildet ist, dass diese ein Fluid, insbesondere eine Flüssigkeit oder ein Gas, in und aus der jeweiligen Kammer transportieren kann. Außerdem ist die Druckquelle so ausgebildet, dass diese angesteuert werden kann. Die Steuerung kann über eine Schnittstelle, beispielsweise eine drahtlose Schnittstelle, erfolgen. Eine Veränderung des Verlaufs des Förderkanals erfolgt mit einer hydraulischen oder pneumatischen Stelleinrichtung, indem die Kammern mit dem Fluid gefüllt werden, wobei zumindest zwei Kammern einen unterschiedlichen Druck aufweisen. Vorteilhafterweise kann die Vorrichtung so einen Körper in Richtung der Faserorientierung aufbauen, ohne dass das Positionierungssystem eine Lagekorrektur vornimmt. Dies ist insbesondere dann von Vorteil, wenn sich der Körper beispielsweise in einem Gefäß befindet, der für das Positionierungssystem nur begrenzt zugänglich ist.

Die Kammern können außerdem bevorzugt über mehrere in Längsrichtung des Förderkanals hintereinander vorgesehene Unterkammern aufweisen, die über Verbindungskanäle miteinander verbunden sind. Die Unterkammern werden bei Ansteuerung einer Druckquelle mit einem Fluid gefüllt, wobei das Fluid über die Verbindungskanäle strömt. Der Abstand der Unterkammern zueinander innerhalb einer Kammer ist von der Länge der Verbindungskanäle abhängig, wobei der Abstand so groß sein sollte, dass die Kammern gegeneinander verschwenkt werden können ohne gegeneinander zu stoßen und damit ohne ihre Verschwenkbewegung gegenseitig zu behindern. Die Anzahl der Unterkammern kann variieren. Denkbar sind mehr als fünf Unterkammern, bevorzugt mehr als vier, besonders bevorzugt mehr als drei Unterkammern, in einer Kammer. Der Abstand zwischen den Unterkammern innerhalb einer Kammer ist vorteilhaft, damit die jeweilige Kammer bei Veränderung des Verlaufs des Förderkanals durch die zugeordnete Stelleinrichtung bzw. Anlegen eines Drucks durch die Druckquelle flexibel ist. Die Wände der Unterkammer sind bevorzugt flexibel, wobei alle Unterkammern bevorzugt in einer gemeinsamen Umhüllung ausgebildet sind, die dem Verlauf des Förderkanals üblicherweise folgt und diesen umfänglich umschließt. Die Umhüllung umschließt dementsprechend üblicherweise sämtliche Unterkammern zwischen sich und der Wand des Förderkanals. Die Umhüllung ist flexibel und/oder elastisch.

Nach einer alternativen bevorzugten Weiterbildung ist die Stelleinrichtung eine mechanische Stelleinrichtung, die an einen flexiblen, den Förderkanal umgebenden Schlauchstück angreift. Die mechanische Stelleinrichtung ist so ausgebildet, dass mit dieser der Verlauf des Förderkanals verändert werden kann. Bevorzugt kann die mechanische Stelleinrichtung angesteuert werden, wobei die Schnittstelle zur Ansteuerung beispielsweise eine drahtlose Schnittstelle sein kann. Andere Arten von Schnittstellen sind ebenfalls denkbar. Vorteilhafterweise können mechanische Stelleinrichtungen einfach mit einem zumindest teilweise flexiblen Förderkanal kombiniert werden.

Eine Stelleinrichtung im Sinne der Erfindung kann beispielsweise auch durch einen oder mehrere hydraulische oder pneumatische Stellzylinder gebildet sein, die außenumfänglich an dem Förderkanal angreifen. Ebenso gut kann ein kleines Positionierungssystem oder Roboter an dem Kanal angreifen und ein Beispiel für eine erfindungsgemäße Stelleinrichtung sein. Gegenüber dem den Extruder tragenden Positionierungssystem hat die bevorzugte Ausgestaltung den Vorteil, dass die Stelleinrichtung lediglich die Ausrichtung des Förderkanals und die Orientierung der Ausförderöffnung verändern, nicht aber den Extruder tragen muss. So kann die Stelleinrichtung relativ raumsparend ausgebildet sein. Ebenso gut kann eine Kombination aus den genannten Stelleinrichtungen zum Einsatz kommen.

Bevorzugt umfasst die Vorrichtung ferner eine Bewegungsplatte, die verschwenkbar an dem Extruder befestigt ist und die Ausrichteinrichtung trägt. Die Bewegungsplatte ist zweidimensional schwenkbar, sodass beispielsweise eine Korrektur des Förderkanals in Bezug auf den aufzubauenden Körper vorteilhafterweise möglich ist. Die Bewegungsplatte ist so ausgebildet, dass die Ausrichteinrichtung über die Bewegungsplatte mit dem Extruder verbunden werden kann. Denkbar ist, dass die Bewegungsplatte zusätzlich so ausgebildet ist, dass ein Austausch oder eine Nachrüstung der Ausrichteinrichtung einfach erfolgen kann. Die Bewegungsplatte erlaubt üblicherweise die relative Schwenkbewegung zwischen zwei Plattensegmenten unter Aufrechterhaltung einer fluidischen Verbindung zwischen dem Förderkanal und dem Extruder. Dadurch kann die Beweglichkeit des Förderkanals erhöht werden. Auch ist es möglich, den Förderkanal lediglich in Grenzen veränderbar auszugestalten und die fehlende Beweglichkeit durch eine Drehung eines gekrümmten Förderkanals um eine Achse, die koaxial zu der Extruderachse verläuft, zu kompensieren.

Weiterhin bezieht sich die Erfindung auf ein Verfahren zur Herstellung eines Körpers aus einem anisotropen Material mit einer beschriebenen Vorrichtung, wobei die fließfähige Suspension Fasern enthält, die bei der Ausförderung aus dem Förderkanal ausgerichtet werden. Das Verfahren umfasst dabei üblicherweise die folgenden Schritte: a) Ansteuern einer Steuereinrichtung, b) Ausrichten des Förderkanals und der Ausförderöffnung über die Steuereinrichtung durch eine Verlaufsänderung des Förderkanals und c) Aufbau des Körpers durch Ausfördern des Materials. Das anisotrope faserhaltige Material wird zunächst durch den Förderkanal mit Hilfe eines Extruders oder einer Pumpe gefördert, während die Ausförderöffnung des Förderkanals durch die Stelleinrichtung in der Umgebung orientiert wird. Durch die Förderung des anisotropen Materials erfolgt eine Ausrichtung der Fasern des Materials. Danach hat das extrudierte Material orthotrope Materialeigenschaften. Bevor das extrudierte Material auf den Körper aufgebracht wird, ändert sich in der Regel der Verlauf des Förderkanals in Richtung des aufzubauenden Körpers. Diese Verlaufsänderung erfolgt durch die Steuereinrichtung, die beispielsweise mit einem Computer über eine Schnittstelle verbunden ist und in Rückkopplung zur Steuerung des Positionierungssystems angesteuert werden kann. Denkbar ist, dass auf dem Computer eine Datenbank hinterlegt ist, die die Steuereinrichtung in Bezug auf den Körper im dreidimensionalen Raum die notwendigen Daten zur Steuerung der Ausrichteinrichtung liefert. Das Verfahren zeigt deutliche Vorteile gegenüber dem Stand der Technik in Bezug auf die Materialeigenschaften des Körpers. So kann die Faserausrichtung im Körper bei diesem additiven Verfahren dreidimensional erfolgen, während derzeitige Verfahren lediglich eine zweidimensionale schichtweise Auftragung ermöglichen. Eine zweidimensionale schichtweise Auftragung hat den Nachteil, dass die Fasern umorientiert und/oder geknickt werden. Durch das erfindungsgemäße Verfahren weist der Körper somit deutlich bessere Zug-, Druck- und Scherfestigkeiten auf.

Denkbar ist ferner der Einsatz in einem Suspensionsdruckverfahren, wobei das zu druckende Material in einem Stützmedium stabilisiert wird. Unter Verwendung von faserhaltigen Materialien erlaubt ein solches Verfahren die Orientierung der Fasern im dreidimensionalen Raum und ermöglicht somit den Aufbau von Körpern mit den genannten verbesserten Materialeigenschaften. Das Stützmedium kann einerseits inert sein, sodass der dreidimensionale Körper nach Erhärtung aus dem Stützmedium entfernt werden kann. Andererseits kann das Stützmedium reaktiv sein, sodass das faserhaltige Material im erhärteten Stützmedium verbleibt und die mechanischen Eigenschaften optimiert. Als inerte Stützmedien kommen beispielsweise strukturviskose Suspensionen mit thixotropen Eigenschaften und als reaktive Stützmedien Stoffe wie Zementleim, Mörtel oder Betone in Betracht.

Nach einer bevorzugten Weiterbildung der vorliegenden Erfindung beinhaltet die fließfähige Suspension ein hydraulisches, mineralisches und/oder ein alkalisch-aktiviertes Bindemittel, wobei der Faseranteil der fließfähigen Suspension zwischen 0,1 und 5 Volumenprozent liegt und/oder die Zugfestigkeit der Fasern zwischen 350 und 7000 MPa liegt und/oder eine Schlankheit der Fasern, die dem Verhältnis gebildet aus der Länge der Fasern geteilt durch den Durchmesser der Fasern entspricht, zwischen 45 und 1500 liegt. Der Faseranteil kann insbesondere zwischen 0,1 und 3 Volumenprozent, zwischen 0,1 und 4 Volumenprozent oder zwischen 3 und 5 Volumenprozent liegen. Die Zugfestigkeit der verwendeten Fasern kann insbesondere zwischen 1500 und 4300 MPa liegen.

Hydraulische Bindemittel sind Bindemittel, die durch Zugabe von Wasser chemisch reagieren. Das bekannteste hydraulische Bindemittel ist der Zement. Unter dem Begriff alkalisch-aktivierte Bindemittel (AAB), werden zahlreiche Bindemittel zusammengefasst, deren Gemeinsamkeit darin besteht, dass sie auf einen alkalischen Lösungsprozess zur Aktivierung angewiesen sind. Alkalisch-aktivierte Bindemittel basieren auf einem Zwei-Komponenten-System bestehend aus einem amorphen Feststoff (Precursor) und einer alkalischen Aktivatorlösung.

Als Precursor können verschiedene Stoffe eingesetzt werden, insofern sie reich an amorphem und unter alkalischen Bedingungen leicht löslichem Aluminat und Silikat (ausgedrückt als Al₂O₃ und SiO₂) sind. Al₂O3 und SiO₂ bilden die Grundlage für die chemische Reaktion und sind zum Beispiel in Metakaolin oder in den Sekundärrohstoffen Hüttensand, Flugasche, Silikastaub sowie verschiedenen Schlacken enthalten. In der Regel ist weiterhin Calcium enthalten. Die größte Bedeutung kommt den Ausgangsstoffen Flugasche, Hüttensand und Metakaolin zu. Die chemische und mineralogische Zusammensetzung der Ausgangsstoffe kann stark variieren.

Um den für die Reaktion notwendigen alkalischen Lösungsprozess herbeizuführen, können verschiedene Aktivatoren zum Einsatz kommen. Die Aktivierung führt zu einem Lösungsprozess, der ohne die Zugabe des Aktivators nicht stattfinden könnte. Mit Hilfe dieses Lösungsprozesses beginnt die Reaktion des Bindemittels und die Reaktionsprodukte können kondensieren.

Aktivatoren können basierend auf ihrer chemischen Zusammensetzung in folgende Gruppen eingeteilt werden:
- Alkalihydroxide (MOH)
- Salze schwacher Säuren (M₂CO₃, M₂SO₃, MF) und Salze starker Säuren (M₂SO₄)
- Alkalisilikate/Wasserglas (M₂O * n SiO₂)
- Alkalialuminate (M₂O * n Al₂O₃)
- Alkalialumosilikate (M₂O * Al₂O₃ * (2-6) SiO₂).

Am häufigsten werden Natriumcarbonat (Na₂CO₃), Natriumhydroxid (NaOH), Natriumsilikate (Na₂O*nSiO₂) und Natriumsulfat (Na₂SO₄) zur Aktivierung eingesetzt.

Mit einer Aktivatorkombination kann Einfluss auf das Abbindeverhalten und die Festigkeiten des alkalisch-aktivierten Bindemittels genommen werden.

Bevorzugt weist das Verfahren zur Herstellung eines Körpers aus einem anisotropen Material mit einer beschriebenen Vorrichtung zusätzlich einen Schritt b2 auf, nämlich das Ausrichten der Ausförderöffnung des Förderkanals achsparallel zu einer Längsachse eines aufzubauenden länglichen Körpers. Der Schritt b2 erfolgt insbesondere im Anschluss an den Schritt b. Eine Ausrichtung der Ausförderöffnung, insbesondere einer Düse, des Förderkanals achsparallel zu der Längsachse des aufzubauenden länglichen Körpers ist wesentlich, damit die Fasern nicht umorientiert und/oder geknickt werden. Vorteilhaft an einer solchen Ausrichtung der Ausförderöffnung des Förderkanals sind die deutlich besseren Materialeigenschaften in Bezug auf die Zug-, Druck- und Scherfestigkeit.

### Figurenbeschreibung

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
Figur 1 eine schematische Darstellung eines ersten Ausführungsbeispiels einer erfindungsgemäßen Vorrichtung in einem computergestützten Materialextrusionsprozess,
Figur 2 eine schematische Darstellung eines Ausschnitts einer Ausrichteinrichtung mit einer hydraulischen oder pneumatischen Stelleinrichtung,
Figur 3 eine schematische Darstellung eines Ausschnitts einer Ausrichteinrichtung mit einer schematisch angedeuteten mechanischen Stelleinrichtung,
Figur 4 eine schematische Darstellung eines zweiten Ausführungsbeispiels einer erfindungsgemäßen Vorrichtung in einem computergestützten Materialextrusionsprozess,
Figur 5 eine schematische Darstellung des zweiten Ausführungsbeispiels bei der Anwendung auf eine bestehende Struktur,
Figur 6 eine Schrägansicht der Ausrichteinrichtung des zweiten Ausführungsbeispiels,
Figur 7 eine Seitenansicht der Ausrichteinrichtung aus Figur 6
Figur 8 eine vergrößerte schematische Darstellung der Faserausrichtung bei der Extrusion des Materials.

Einander entsprechende oder gleiche Teile sind in den Figuren jeweils mit den gleichen Bezugszeichen versehen.

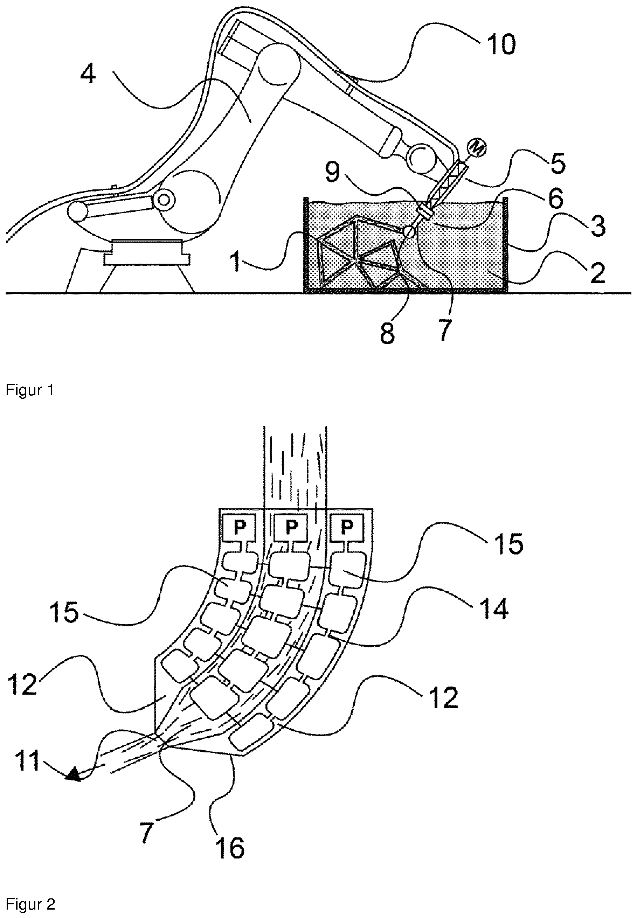

Figur 1 zeigt eine schematische Darstellung einer Vorrichtung zum Aufbauen eines Körpers 1 in einem Stützmedium 2, welches sich in einem Gefäß 3 befindet. Die Vorrichtung umfasst ein Positionierungssystem 4 in Form eines Industrie-Roboters, einen Extruder 5 und eine Ausrichteinrichtung 6. Der Extruder 5 ist mit der Ausrichteinrichtung 6 verbunden, wobei die Ausrichteinrichtung 6 einen Förderkanal 7, eine mechanische Stelleinrichtung 8 und eine mechanische Stelleinrichtung 9 aufweist.

Für den Aufbau des Körpers 1 wird faserhaltiges anisotropes Material zunächst über eine Förderzufuhr 10 in den Extruder 5 gefördert, in dem das Material extrudiert und anschließend in die Ausrichteinrichtung 6 weitergeleitet wird. Im Laufe dieses Prozesses werden die Fasern im Material ausgerichtet. Eine Ausrichtung der Fasern kann beispielsweise durch eine Verjüngung eines Kanals erfolgen, beispielsweise durch eine Düse 11 am Ende des Förderkanals 7, oder durch innere Scherkräfte durch die Strömungsgeschwindigkeit des Materials während der Förderung. Je nachdem in welcher Raumrichtung der Körper 1 aufgebaut wird, ändert sich der Verlauf des Förderkanals 7 durch die Steuerung der mechanischen Stelleinrichtungen 8, 9 in Richtung des aufzubauenden Körpers 1. Anstelle der mechanischen Stelleinrichtung 9 kann eine Bewegungsplatte eine Ausrichtung oder Korrektur der Ausrichtung des Förderkanals bewirken, indem zwei Scheiben der Bewegungsplatte gegeneinander um eine sich koaxial zu der Mittellängsachse des Extruders 5 erstreckende Achse verschwenkt werden. Das Material mit ausgerichteten Fasern wird am Ende des Förderkanals 7 gezielt genutzt, um den Körper 1 in Faserrichtung aufzubauen.

Figur 2 zeigt eine schematische Darstellung eines Ausschnitts einer Ausrichteinrichtung mit einer hydraulischen oder pneumatischen Stelleinrichtung. Im Zentrum befindet sich der Förderkanal 7, in dem das extrudierte Material in Richtung der Düse 11 gefördert wird. Umfänglich um den Förderkanal 7 sind drei Kammern 12 angeordnet, die jeweils eine Druckquelle P 13 aufweisen. Jede Druckquelle P 13 ist über Verbindungskanäle 14 mit fünf Unterkammern 15 verbunden. Die Unterkammern 15 sind umfänglich um den Förderkanal 7 verteilt angeordnet. Jede Unterkammer 15 hat flexible Kammerwandungen, sodass die Unterkammern 15 jeweils unterschiedliche Formen abhängig von dem in den Unterkammern 15 wirkenden Druck annehmen können. Sämtliche Unterkammern 15 sind von einer Umhüllung 16 umgegeben. Dementsprechend befinden sich sämtliche Unterkammern 15 zwischen dem Förderkanal 7 und der Umhüllung 16. Die Umhüllung 16 schützt die Unterkammern 15 mechanisch oder vor Verschmutzung und schafft ein ästhetisch ansprechendes Erscheinungsbild des Förderkanals 7 im Anschluss an den Extruder 5.

Für eine gesteuerte Veränderung des Verlaufs des Förderkanals 7 werden die drei unterschiedlichen Druckquellen P 13 angesteuert, wodurch sich alle Unterkammern 15 mit einem Fluid füllen. Jede der drei Kammern 12 werden mit einem unterschiedlichen Druck gefüllt, sodass sich der Verlauf des Förderkanals 7 ändert. Über die Steuerung des Drucks in den einzelnen Kammern 12 kann die Düse 11 somit in Richtung des aufzubauenden Körpers 1 ausgerichtet werden.

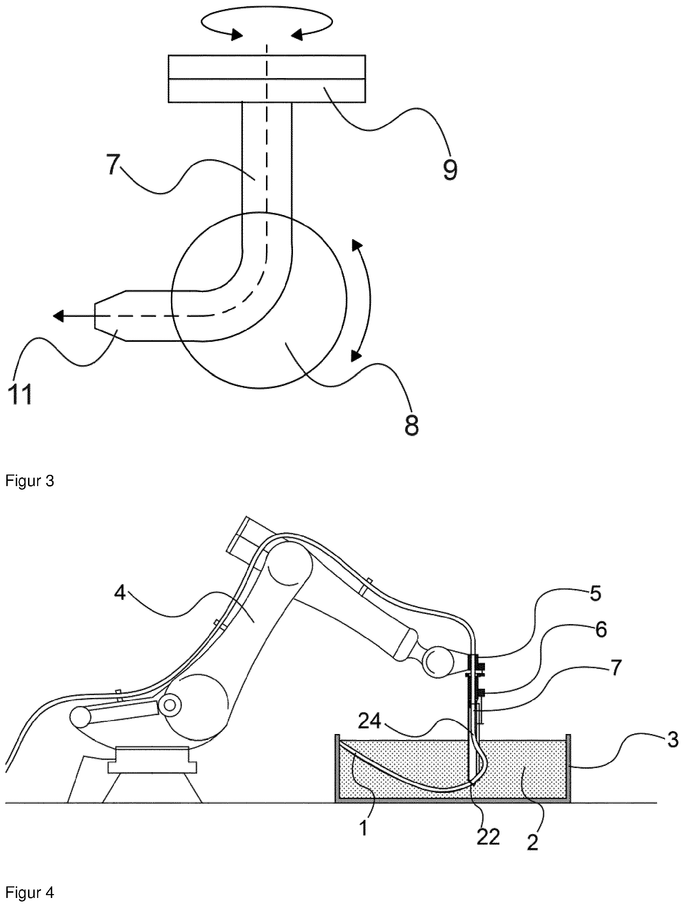

Figur 3 zeigt eine schematische Darstellung eines Ausschnitts einer Ausrichteinrichtung mit einer mechanischen Stelleinrichtung 8. Die Ausrichteinrichtung weist einen Förderkanal 7 mit einer Düse 11 auf, der mit einer Bewegungsplatte 9 verbunden ist. Die mechanische Stelleinrichtung 8 greift an einen flexiblen, den Förderkanal umgebenden Schlauchstück an und verändert somit die Orientierung der Ausförderöffnung 26 und den Verlauf des Förderkanals 7 in Richtung des aufzubauenden Körpers 1.

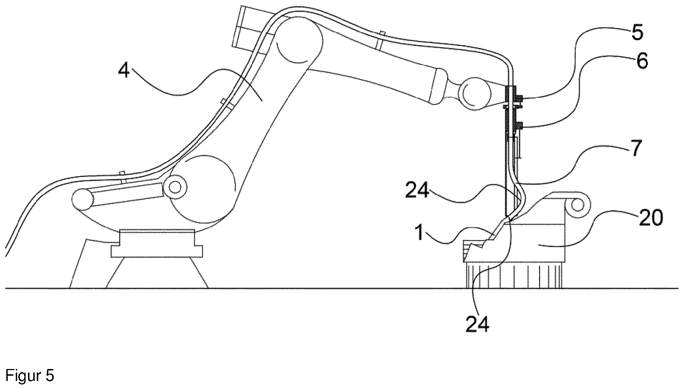

Figur 4 zeigt eine schematische Darstellung eines zweiten Ausführungsbeispiels einer Vorrichtung zum Aufbauen eines Körpers, das sich von dem zuvor beschriebenenen ersten Ausführungsbeispiel im Wesentlichen durch den Aufbau der Ausrichteinrichtung 6 unterscheidet. Die Vorrichtung ist, wie in Figur 4 dargestellt, zur Ausbildung eines Körpers in einem Stützmedium 2 anwendbar oder, wie in Figur 5 dargestellt, zum Aufbau eines Körpers auf einer bestehenden Struktur 20. Auch die Vorrichtung nach dem ersten Ausführungsbeispiel eignet sich zum Aufbau eines Körpers auf einer bestehenden Struktur. Eine beschädigte bzw. unvollständige bestehende Struktur kann beispielsweise wiederhergestellt werden, indem fehlende Teile durch Auftragen des extrudierten Materials auf die bestehende Struktur nachgebildet werden.

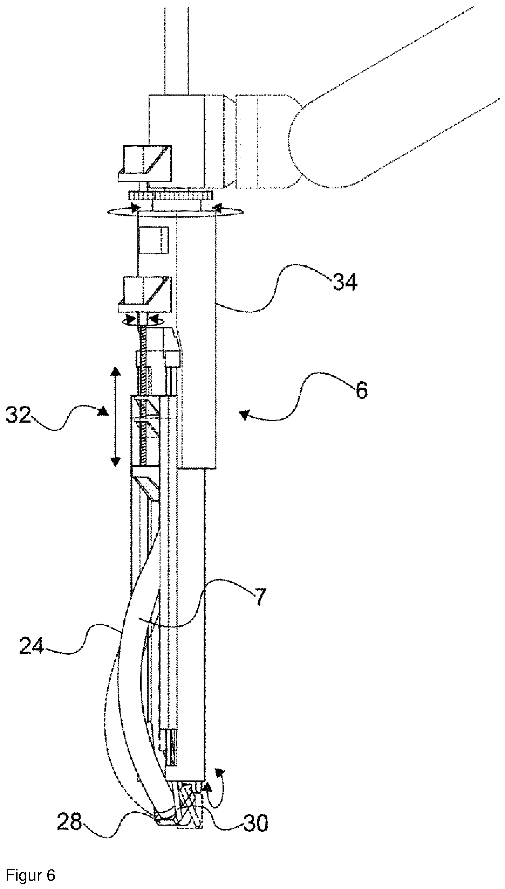

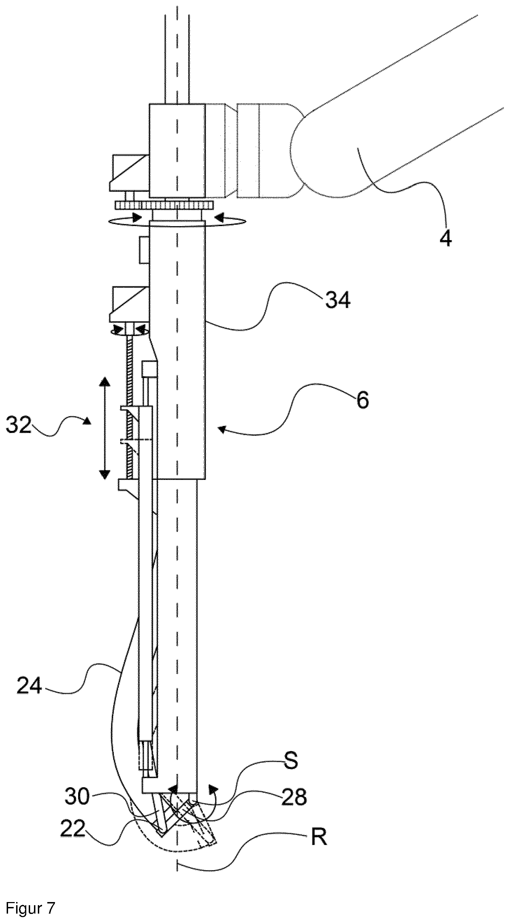

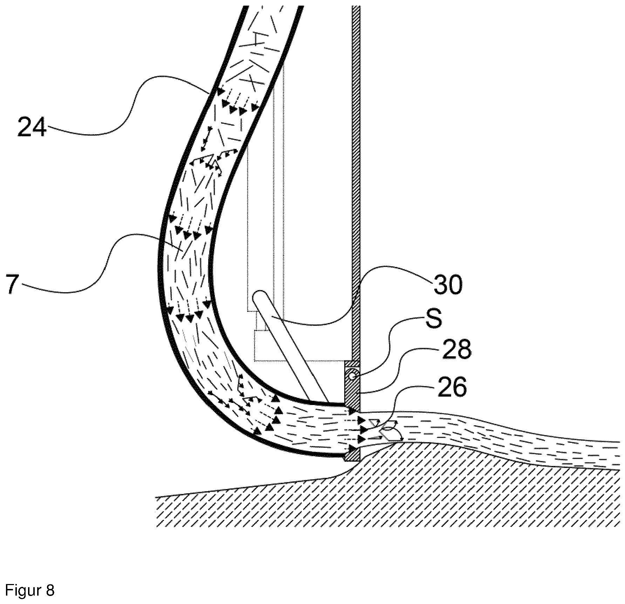

Die Ausrichteinrichtung 6 der Vorrichtung der Figuren 4 und 5 ist in der Figur 6 im Detail dargestellt. Die Stelleinrichtung dieses Ausführungsbeispiels weist eine steuerbare mechanische Halterung 22 auf, die an ein flexibles, den Förderkanal 7 umgebendes Schlauchstück 24 angreift. Dabei greift die Halterung 22 an einem Ende des Förderkanals 7 an dem Schlauchstück 24 an. Zur Ausrichtung einer Ausförderöffnung 26 des Förderkanals 7 ist ein erstes plattenförmiges Stellelement 28 der Halterung 22 an der Ausförderöffnung 26 befestigt und um eine Schwenkachse S schwenkbar (s. Fig. 8). Ein bewegbarer Hebel 30 als zweites Stellelement der Halterung 22 ist über ein Gelenk mechanisch mit dem ersten Stellelement 28 gekoppelt und zum Einstellen des Schwenkwinkels S des ersten Stellelements 28 steuerbar. Durch eine Höhenverstelleinrichtung 32 ist die Höhenlage des Hebels 30 einstellbar. Eine Drehvorrichtung 34 der Ausrichteinrichtung 6, an dem die Halterung 22 befestigt ist, ist um eine Rotationsachse R drehbar. Die Schwenkachse S ist dabei stets quer zu der Rotationsachse R ausgerichtet (s. Fig. 7).

Die Figur 8 zeigt das plattenförmige erste Stellelement 28 in vergrößerter Darstellung. Es hat ein zentrales Durchgangsloch, das mit der Ausförderöffnung 26 des Förderkanals 7 kommuniziert und sich ausgehend von der Ausförderöffnung 26 nach Art einer Düse konisch verjüngt. Die Ausförderöffnung des Förderkanals 7 sowie das zentrale Durchgangsloch werden in dem in Figur 8 dargestellten Extrusionsvorgang achsparallel zu einer Längsachse eines aufzubauenden länglichen Körpers ausgerichtet, damit die Fasern nicht umorientiert und/oder geknickt werden.

### Bezugszeichenliste

- 1: Körper
- 2: Stützmedium
- 3: Gefäß
- 4: Positionierungssystem
- 5: Extruder
- 6: Ausrichteinrichtung
- 7: Förderkanal
- 8, 9: mechanische Stelleinrichtung
- 10: Förderzufuhr
- 11: Düse
- 12: Kammer
- 13: Druckquelle P
- 14: Verbindungskanal
- 15: Unterkammer
- 16: Umhüllung
- 20: bestehende Struktur
- 22: mechanische Halterung
- 24: Schlauchstück
- 26: Ausförderöffnung
- 28: erstes Stellelement
- 30: zweites Stellelement
- 32: Höhenverstelleinrichtung
- 34: Drehvorrichtung der Ausrichteinrichtung
- R: Rotationsachse
- S: Schwenkachse

## Patentansprüche

1. Vorrichtung für die additive Fertigung mit einer Fördervorrichtung (5), die als ein Extruder oder als eine Pumpe ausgebildet ist, der bzw. die zur Förderung einer fließfähigen Suspension angepasst ausgebildet ist und als Schneckenextruder, Planetwalzenextruder, Kaskadenextruder, Vielwellenextruder, Einschneckenextruder, gleichläufiger oder gegenläufiger Doppelschneckenextruder, Exzenterschneckenpumpe, Kolbenpumpe oder Schneckenpumpe ausgebildet ist, einem Positionierungssystem (4), und einem mit einer Ausgangsöffnung der Fördervorrichtung (5) kommunizierenden Förderkanal (7), wobei die Fördervorrichtung (5) an dem Positionierungssystem (4) befestigt ist und der Extruder oder die Pumpe durch das Positionierungssystem (4) translatorisch bewegbar ist, wobei die Vorrichtung eine dem Förderkanal (7) zugeordneten Stelleinrichtung zur gesteuerten Veränderung einer Orientierung einer Ausförderöffnung des Förderkanals (7) aufweist und der Förderkanal zumindest teilweise aus einem flexiblen Material besteht, sodass die zugeordnete Stelleinrichtung eine Veränderung des Verlaufs des Förderkanals ermöglicht.

2. Vorrichtung nach Anspruch 1, **dadurch gekennzeichnet, dass** die Stelleinrichtung eine steuerbare mechanische Halterung (22) aufweist, die an ein flexibles, den Förderkanal (7) umgebendes Schlauchstück (24) angreift.

3. Vorrichtung nach Anspruch 2, **dadurch gekennzeichnet, dass** die Halterung (22) an einem Ende des Förderkanals (7) an dem Schlauchstück (24) angreift und zur Veränderung der Orientierung der Ausförderöffnung (26) des Förderkanals (7) um eine Schwenkachse (S) schwenkbar ist.

4. Vorrichtung nach Anspruch 3, **dadurch gekennzeichnet, dass** die Halterung (22) schwenkbar befestigt ist und ein erstes Stellelement (28), das an der Ausförderöffnung (26) des Förderkanals (7) angreift und um die Schwenkachse (S) schwenkbar gelagert ist, und ein mit dem ersten Stellelement (28) mechanisch gekoppeltes zweites Stellelement (30) zum Einstellen des Schwenkwinkels des ersten Stellelements (28) umfasst.

5. Vorrichtung nach einem der Ansprüche 2 bis 4, **dadurch gekennzeichnet, dass** die Halterung (22) an einer Drehvorrichtung (34) befestigt ist und zumindest ein die Schwenkachse (S) lagernder Teil der Drehvorrichtung (34) um eine Rotationsachse (R) der Drehvorrichtung (34) drehbar ist und dass die Schwenkachse (S) quer zu der Rotationsachse (R) verläuft.

6. Vorrichtung nach Anspruch 5, **dadurch gekennzeichnet, dass** die Rotationsachse (R) der Drehvorrichtung (34) achsparallel oder koaxial zur Ausgangsöffnung des Extruders oder der Pumpe (5) ausgerichtet ist.

7. Vorrichtung nach einem der vorherigen Ansprüche, **gekennzeichnet durch** eine mit einem Ende des Förderkanals (7) verbundene Düse (11), die so ausgebildet ist, dass anisotropes Material, insbesondere faserhaltiges Material, bei der Ausförderung ausgerichtet oder orientiert wird.

8. Vorrichtung nach einem der vorherigen Ansprüche, **dadurch gekennzeichnet, dass** mehrere umfänglich um den Förderkanal (7) angeordnete Kammern (12) vorgesehen sind, denen jeweils eine Druckquelle (13) für das Einbringen eines Fluids in die Kammer (12) zugeordnet ist.

9. Vorrichtung nach Anspruch 8, **dadurch gekennzeichnet, dass** die Kammern (12) über mehrere in Längsrichtung des Förderkanals (7) hintereinander vorgesehene Unterkammern (15) aufweisen, die über Verbindungskanäle (14) miteinander verbunden sind.

10. Vorrichtung nach einem der vorherigen Ansprüche, **dadurch gekennzeichnet, dass** das Positionierungssystem (4) ein mehrachsiges Portalsystem oder ein Industrieroboter ist.

11. Vorrichtung nach einem der vorherigen Ansprüche, **gekennzeichnet durch** eine kontinuierlich und korrespondierend zum Aushärtungsfortschritt der ausgeförderten Suspension weiterschiebbare Gleitschalung.

12. Verfahren zur Herstellung eines Körpers aus einem anisotropen Material aus einer fließfähigen Suspension mit einer Vorrichtung nach einem der vorherigen Ansprüche,
wobei die fließfähige Suspension Fasern enthält, die bei der Ausförderung aus dem Förderkanal (7) ausgerichtet werden und wobei das Verfahren die folgenden Schritte umfasst:
a) Ansteuern einer Steuereinrichtung,
b) Ausrichten des Förderkanals und der Ausförderöffnung über die Steuereinrichtung durch eine Verlaufsänderung des Förderkanals und
c) Aufbau des Körpers durch Ausfördern des Materials.

13. Verfahren nach Anspruch 12, **dadurch gekennzeichnet, dass** die Ausförderöffnung des Förderkanals achsparallel zu einer Langsachse des Körpers ausgerichtet wird, bevor und/oder während die fließfähige Suspension durch die Ausförderöffnung ausgefördert wird.

14. Verfahren nach Anspruch 12 oder 13, **dadurch gekennzeichnet, dass** die fließfähige Suspension ein hydraulisches, mineralisches und/oder alkalisch-aktiviertes Bindemittel beinhaltet, wobei der Faseranteil der fließfähigen Suspension zwischen 0,1 und 5 Volumenprozent liegt und/oder die Zugfestigkeit der Fasern zwischen 350 und 7000 MPa liegt und/oder ein Verhältnis gebildet aus der Länge der Fasern geteilt durch den Durchmesser der Fasern zwischen 45 und 1500 liegt.

15. Verfahren nach Anspruch 12, 13 oder 14, **dadurch gekennzeichnet, dass** die fließfähige Suspension aus Faserbeton bzw. -mörtel gebildet wird.

## Claims

1. Device for additive manufacturing with a conveying device (5) which is configured as an extruder or as a pump, which is adapted to convey a flowable suspension and is configured as a screw extruder, planetary roller extruder, cascade extruder, multi-shaft extruder, single-screw extruder, co-rotating or counter-rotating twin-screw extruder, eccentric screw pump, piston pump or screw pump, a positioning system (4), and a conveying channel (7) communicating with an outlet opening of the conveying device (5), wherein the conveying device (5) is attached to the positioning system (4) and the extruder or the pump is translationally movable by the positioning system (4), wherein the device has an adjusting device assigned to the conveying channel (7) for the controlled change of an orientation of an discharge opening of the conveying channel (7) and the conveying channel consists at least partially of a flexible material, so that the assigned adjusting device enables a change in the course of the conveying channel.

2. Device according to claim 1, **characterised in that** the adjusting device has a controllable mechanical holder (22) which engages on a flexible hose piece (24) enclosing the conveying channel (7).

3. Device according to claim 2, **characterised in that** the holder (22) engages on the hose piece (24) at one end of the conveying channel (7) and is pivotable about a pivot axis (S) to change the orientation of the discharge opening (26) of the conveying channel (7).

4. Device according to claim 3, **characterised in that** the holder (22) is pivotably mounted and comprises a first adjusting element (28), which engages on the discharge opening (26) of the conveying channel (7) and is pivotably mounted about the pivot axis (S), and a second adjusting element (30) mechanically coupled to the first adjusting element (28) for adjusting the pivot angle of the first adjusting element (28).

5. Device according to one of claims 2 to 4, **characterised in that** the holder (22) is fastened to a rotary device (34) and at least one part of the rotary device (34) bearing the pivot axis (S) is rotatable about an axis of rotation (R) of the rotary device (34) and **in that** the pivot axis (S) extends transversely to the axis of rotation (R).

6. Device according to claim 5, **characterised in that** the axis of rotation (R) of the rotating device (34) is aligned axially parallel or coaxial to the outlet opening of the extruder or the pump (5).

7. Device according to one of the preceding claims, **characterised by** a nozzle (11) connected to one end of the conveying channel (7), which is designed such that anisotropic material, in particular material containing fibres, is aligned or oriented during discharge.

8. Device according to one of the preceding claims, **characterised in that** a plurality of chambers (12) arranged circumferentially around the conveying channel (7) are provided, each of which is assigned a pressure source (13) for introducing a fluid into the chamber (12).

9. Device according to claim 8, **characterised in that** the chambers (12) have a plurality of sub-chambers (15) which are provided one behind the other in the longitudinal direction of the conveying channel (7) and which are connected to one another via connecting channels (14).

10. Device according to one of the preceding claims, **characterised in that** the positioning system (4) is a multi-axis gantry system or an industrial robot.

11. Device according to one of the preceding claims, **characterised by** a sliding mould which can be continuously advanced in accordance with the progress of curing of the suspension conveyed.

12. Method of producing a body of an anisotropic material from a flowable suspension using a device according to any one of the preceding claims,
wherein the flowable suspension contains fibres which are aligned during discharge from the conveying channel (7), and wherein the method comprises the following steps:
a) Activation of a control device,
b) Aligning the conveying channel and the discharge opening via the control device by changing the course of the conveying channel and
c) Building up the body by discharging the material.

13. Method according to claim 12, **characterised in that** the discharge opening of the conveying channel is aligned axially parallel to a longitudinal axis of the body before and/or while the flowable suspension is discharged through the discharge opening.

14. Method according to claim 12 or 13, **characterised in that** the flowable suspension contains a hydraulic, mineral and/or alkali-activated binder, wherein the fibre content of the flowable suspension is between 0.1 and 5 per cent by volume and/or the tensile strength of the fibres is between 350 and 7000 MPa and/or a ratio formed by the length of the fibres divided by the diameter of the fibres is between 45 and 1500.

15. Method according to claim 12, 13 or 14, **characterised in that** the flowable suspension is formed from fibre-reinforced concrete or mortar.

## Revendications

1. Dispositif de fabrication additive comprenant un dispositif d'alimentation (5) conçu comme une extrudeuse ou une pompe, qui est conçue de manière à être adaptée pour l'alimentation d'une suspension fluide et est conçue comme une extrudeuse à vis, une extrudeuse à rouleaux planétaires, une extrudeuse en cascade, une extrudeuse multivis, une extrudeuse monovis, une extrudeuse à double vis co-rotative ou contrarotative, une pompe à vis excentrique, une pompe à piston ou une pompe à vis, un système de positionnement (4), et un canal d'alimentation (7) communiquant avec une ouverture de sortie du dispositif d'alimentation (5), dans lequel le dispositif d'alimentation (5) est fixé au système de positionnement (4) et l'extrudeuse ou la pompe est mobile en translation à l'aide du système de positionnement (4), dans lequel le dispositif comporte un dispositif de réglage associé au canal d'alimentation (7) pour une modification contrôlée de l'orientation d'une ouverture de décharge du canal d'alimentation (7), et le canal d'alimentation est à au moins partiellement constitué d'un matériau flexible, de sorte que le dispositif de réglage associé permet la modification du tracé du canal d'alimentation.

2. Dispositif selon la revendication 1, **caractérisé en ce que** le dispositif de réglage comporte un support mécanique contrôlable (22) qui s'engage dans un morceau de tuyau flexible (24) entourant le canal d'alimentation (7) .

3. Dispositif selon la revendication 2, **caractérisé en ce que** le support (22) s'engage avec le morceau de tuyau flexible (24) à une extrémité du canal d'alimentation (7) et est pivotable autour d'un axe de pivotement (S) pour une modification de l'orientation de l'ouverture de décharge (26) du canal d'alimentation (7).

4. Dispositif selon la revendication 3, **caractérisé en ce que** le support (22) est monté de manière pivotante, et comporte un premier élément de réglage (28) qui s'engage avec l'ouverture de décharge (26) du canal d'alimentation (7) et est monté de manière pivotante autour de l'axe de pivotement (S) et un deuxième élément de réglage (30) couplé mécaniquement au premier élément de réglage (28) pour régler l'angle de pivotement du premier élément de réglage (28).

5. Dispositif selon l'une des revendications 2 à 4, **caractérisé en ce que** le support (22) est fixé à un dispositif rotatif (34) et au moins une partie du dispositif rotatif (34) supportée sur l'axe de pivotement (S) peut tourner autour d'un axe de rotation (R) du dispositif rotatif (34), et **en ce que** l'axe de pivotement (S) s'étend transversalement à l'axe de rotation (R).

6. Dispositif selon la revendication 5, **caractérisé en ce que** l'axe de rotation (R) du dispositif rotatif (34) est aligné de manière parallèle à l'axe ou coaxiale à l'ouverture de sortie de l'extrudeuse ou de la pompe (5) .

7. Dispositif selon l'une des revendications précédentes, **caractérisé par** une buse (11) connectée à une extrémité du canal d'alimentation (7) qui est conçue de telle sorte qu'un matériau anisotrope, en particulier un matériau fibreux, est aligné ou orienté lors de la décharge.

8. Dispositif selon l'une des revendications précédentes, **caractérisé en ce que** plusieurs chambres (12) sont pourvues circonférentiellement autour du canal d'alimentation (7), à chacune desquelles est associée une source de pression (13) pour introduire un fluide dans la chambre (12).

9. Dispositif selon la revendication 8, **caractérisé en ce que** les chambres (12) comportent une pluralité de chambres secondaires (15) pourvues les unes derrière les autres en sens longitudinal du canal d'alimentation (7), qui sont connectées entre elles par des canaux de connexion (14).

10. Dispositif selon l'une des revendications précédentes, **caractérisé en ce que** le système de positionnement (4) est un système portique multiaxes ou un robot industriel.

11. Dispositif selon l'une des revendications précédentes, **caractérisé par** un coffrage coulissant qui peut être glissé vers l'avant en continu et en fonction de la progression du durcissement de la suspension déchargée.

12. Procédé de fabrication d'un corps en un matériau anisotrope à partir d'une suspension fluide au moyen d'un dispositif selon l'une des revendications précédentes,
dans lequel la suspension fluide contient des fibres qui sont alignées lors de la décharge du canal d'alimentation (7), et dans lequel le procédé comprend les étapes suivantes :
a) commande d'un dispositif de contrôle,
b) alignement du canal d'alimentation et de l'ouverture de décharge via le dispositif de contrôle par une modification du tracé du canal d'alimentation, et
c) construction du corps en déchargeant le matériau.

13. Procédé selon la revendication 12, **caractérisé en ce que** l'ouverture de décharge du canal d'alimentation est alignée parallèlement à un axe longitudinal du corps avant et/ou pendant que la suspension fluide est déchargée à travers l'ouverture de décharge.

14. Procédé selon la revendication 12 ou 13, **caractérisé en ce que** la suspension fluide contient un liant hydraulique, minéral et/ou activé par un alcalin, dans lequel la teneur en fibres de la suspension fluide est comprise entre 0,1 et 5 % en volume et/ou la résistance à la traction des fibres est comprise entre 350 et 7000 MPa et/ou le ratio de la longueur des fibres divisée par le diamètre des fibres est compris entre 45 et 1500.

15. Procédé selon la revendication 12, 13 ou 14, **caractérisé en ce que** la suspension fluide est constituée de béton fibré ou de mortier fibré.
